# EUROPEAN PATENT SPECIFICATION

(11) **EP 4 031 952 B1**
(45) Date of publication and mention of the grant of the patent: **19.02.2025**
(21) Application number: 20789668.9
(22) Date of filing: 17.09.2020
(51) Int. Cl.: G05D 1/00

(54) **DEVICE FOR SELF-MOVEMENT OF WHEEL-EQUIPPED APPARATUSES, AND RELATED SYSTEM AND METHOD**
VORRICHTUNG ZUR SELBSTBEWEGUNG VON GERÄTEN MIT RÄDERN UND ENTSPRECHENDES SYSTEM UND VERFAHREN
DISPOSITIF DE MOUVEMENT AUTONOME D'APPAREILS MUNIS DE ROUES, ET SYSTÈME ET PROCÉDÉ ASSOCIÉS

(30) Priority: 19.09.2019 IT 201900016730
(43) Date of publication of application: 27.07.2022
(73) Proprietor: Alba-Robot Srl, 10128 Torino (TO) (IT)
(72) Inventor: SEGATO, Andrea, 10128 Torino (TO) (IT); RUSSOTTI, Luca, 95030 Mascaluccia (CT) (IT)
(74) Representative: Metroconsult Srl
(86) International application number: PCT/IB2020/058662
(87) International publication number: WO 2021/053568

(56) References cited:
- EP-A1- 3 355 148
- US-A1- 2004 093 650
- US-A1- 2018 224 853

## Description

The present invention relates to a device for self-movement of wheel-equipped apparatuses, in accordance with the preamble of claim 1. In particular, the following will illustrate a device for self-movement of wheelchairs, along with the associated system and method. The scope of the present invention embraces a device, and the related system and method, for self-movement of wheelchairs, stretchers, trolleys or similar wheel-equipped apparatuses, e.g. prearranged for being manually moved by a user. The device of the present invention can be easily installed on said wheel-equipped apparatuses and can operate both in indoor environments, e.g. hospitals, airports, shopping centres, etc., and in outdoor environments, e.g. city centres, pedestrian precincts, parks, etc.

Most of current wheel-equipped apparatuses, e.g. wheelchairs, stretchers, trolleys or the like, are prearranged for being moved, e.g. pushed, by at least one user. Kits are known which permit the installation of electric motors on push-type wheelchairs, so as to make them more easily movable by a user, e.g. the system described in Mexican patent application MX2017005757, or the "Light Drive" propulsor (http://progettiamoautonomia.it/prodotto/propulsione-per-carrozzina-light-drive). Wheelchairs are also known which have been specifically designed to be moved autonomously, i.e. requiring no help from a user. Let us consider, for example, United States patent application US2017266069, which describes a self-moving wheelchair; such systems often turn out to be much more expensive than kit solutions or the like.

The devices for self-movement of wheel-equipped apparatuses currently known in the art, like US 2018/224853 a1, suffer from a number of drawbacks, which will be illustrated below.

A first drawback is related to the fact that such devices are difficult to install, in that very often such systems are made up of several interconnected elements, e.g. mechanical parts, electric connectors, etc., which cannot be easily handled by a user who has not been appropriately trained to install such systems.

Another drawback of self-movement devices known in the art lies in the high costs due to the use of expensive components, such as, for example, 3D LIDAR units.

A further drawback of the known systems is related to the fact that they do not allow moving more than one wheel-equipped apparatus at the same time, nor transporting people and things at the same time. Let us consider, for example, a situation in which a user needs to move two or more wheel-equipped apparatuses, on which electric propulsors, e.g. the above-mentioned kits, have been installed. Let us consider, for example, a user in a wheelchair who needs to move a shopping cart in a shopping centre, or a nurse having to move two wheelchairs at the same time in a hospital department. In such circumstances, a single user will not be able to move more than one wheel-equipped apparatus at a time.

It is therefore one object of the present invention to solve these and other problems suffered by the prior art, in particular by providing a device, as well as the associated method and system, for self-movement of wheel-equipped apparatuses which can be easily installed by an untrained user.

It is another object of the present invention to provide a device, as well as the associated method and system, for self-movement of wheel-equipped apparatuses which is less expensive than the current self-moving wheel-equipped apparatuses.

It is a further object of the present invention to provide a device, as well as the associated method and system, for self-movement of wheel-equipped apparatuses which permits moving several wheel-equipped apparatuses at the same time.

It is yet another object of the present invention to provide a device, as well as the associated method and system, for self-movement of wheel-equipped apparatuses which permits moving people and things at the same time.

The invention described herein consists of a modular and configurable device for self-movement of wheel-equipped apparatuses.

Further advantageous features of the present invention are set out in the appended claims, which are an integral part of the present description.

The invention will now be described in detail by means of some non-limiting embodiments with particular reference to the annexed drawings, wherein:
- Figures 1a, 1b and 1c schematically show three examples of systems comprising at least one device for self-movement of wheel-equipped apparatuses in accordance with first, second and third embodiments of the present invention, respectively;
- Figure 2 shows an illustrative structural diagram of the device for self-movement of wheel-equipped apparatuses, with reference to the systems shown in Figures 1a, 1b and 1c;

- Figure 3 shows an illustrative block diagram of the device for self-movement of wheel-equipped apparatuses of Figure 2;
- Figure 4 shows an illustrative flow chart of a method for self-movement of wheel-equipped apparatuses, with reference to the device shown in Figure 3.

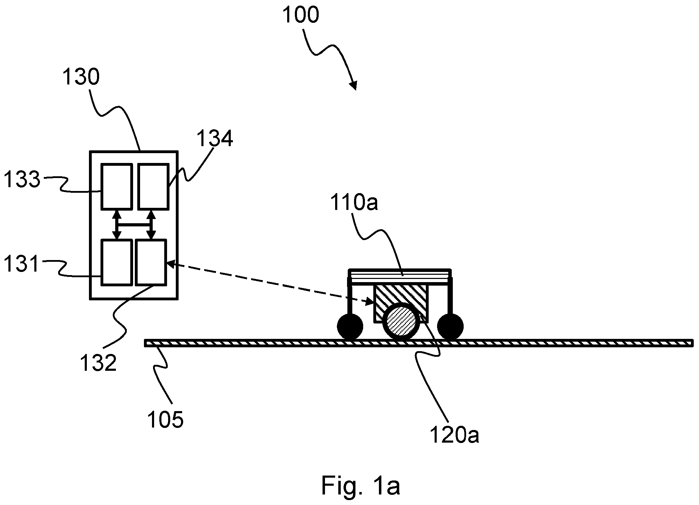

With reference to Figure 1a, there is schematically shown a system 100 comprising at least one device 120a for self-movement of a wheel-equipped apparatus 110a and a management unit 130 according to a first embodiment of the present invention. Said device 120a is adapted to be anchored to said wheel-equipped apparatus 110a, and is capable of moving on a support surface 105. The wheel-equipped apparatus 110a may be, for example, a wheelchair originally conceived for being moved manually by a disabled user, i.e. a wheelchair without any kind of propulsor, which is moved by the user him/herself, e.g. by applying a driving force with his/her arms. In the present embodiment of the invention, the device 120a is adapted to be anchored to the wheel-equipped apparatus 110a in such a way as to remain in contact with the support surface 105. Alternatively, the device 120a is adapted to be anchored to the wheel-equipped apparatus 110a in such a way as to remain in contact with the wheels of said wheel-equipped apparatus 110a, e.g. by friction.

The management unit 130 is adapted to manage said at least one device 120a for self-movement of at least one wheel-equipped apparatus 110a. Said management unit 130 may be used by the user, for example, in order to set up a path to be followed by said at least one device 120a and to display such path for the user him/herself. The management unit 130 may comprise, for example, a memory 131, an interface module 132, an input/output module 133 and a processor 134 operatively connected with one another; the management unit 130 may be, for example, a computer, a smartphone, a tablet, etc.

The memory 131 of the management unit 130 is adapted to internally store information about the management of said at least one device 120a for self-movement of at least one wheel-equipped apparatus 110a. Such information may comprise, for example, data received from the device 120a, e.g. values indicating the position, speed and operating state of the device 120a, maps of at least a portion of the environment where said device 120a is operating, and so forth.

Such information is sent and/or received by the management unit 130 in communication with said device 120a by means of the interface module 132, which may be, for example, a USB, ETHERNET, WiFi, Bluetooth, GSM, etc. interface. For example, in the present embodiment of the invention said device 120a may be connected to the interface module 132 of the management unit 130 by means of a Bluetooth interface.

The input/output module 133 allows the user to interact with the management unit 130. The input/output module may comprise output and input means, e.g. a display and an alphanumeric keyboard, respectively, or, alternatively, a touchscreen displaying an alphanumeric keyboard and interactive symbols.

The processor 134 of the management unit 130 is adapted to process the information contained in the memory 131 of the management unit 130, e.g. in order to generate one or more paths for said device 120a. The processor 134 of the management unit 130 is adapted to display, via said input/output module 133, the generated maps and/or the state of the device 120a.

The management unit 130 may be implemented, for example, as a computer program product comprising portions of software code, which can be loaded into a memory of a smartphone, a tablet or a computer equipped with interface means such as, for example, a USB, ETHERNET, WiFi, Bluetooth, GSM, etc. interface.

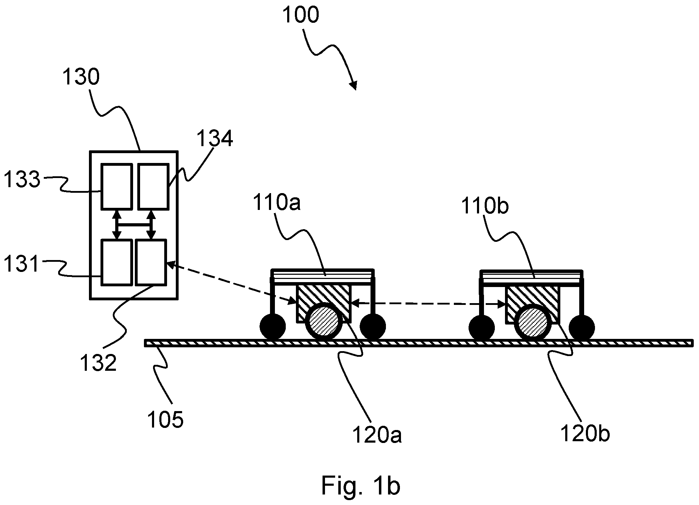

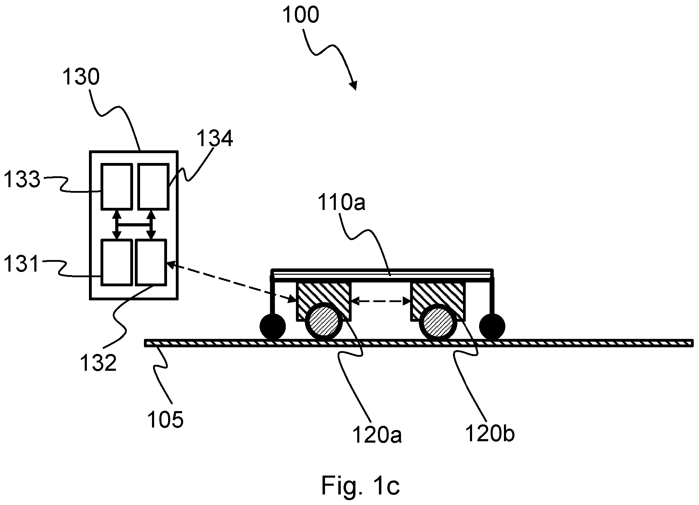

In one embodiment of the invention, with particular reference to the system 100 of Figures 1a, 1b and 1c, the management unit 130 may be a user's smartphone, which is connected, through the interface module 132, to said device 120a anchored to said wheel-equipped apparatus 110a, e.g. a wheelchair being used by the user him/herself.

In the first embodiment of the invention (Figure 1a), said device 120a is adapted to work in a standalone operating configuration, in which said device 120a is adapted to autonomously move only one wheel-equipped apparatus 110a to which it is anchored.

In the second embodiment of the invention (Figure 1b) a variant of the system 100 is represented which comprises one or more devices 120a, 120b for self-movement of one or more wheel-equipped apparatuses 110a, 120b and said management unit 130. In this embodiment of the invention, the device 120a is adapted to be anchored to the wheel-equipped apparatus 110a, while the other device 120b is adapted to be anchored to another wheel-equipped apparatus 110b. The wheel-equipped apparatus 110a may be, for example a wheelchair originally prearranged for being moved manually by a disabled user, or a wheelchair without any kind of propulsor to be moved by the user him/herself, e.g. by applying a driving force through his/her arms. The other wheel-equipped apparatus 110b may be, for example, a shopping cart at a shopping centre, into which the user puts one or more articles of interest, or a luggage cart at an airport. In the present embodiment of the invention, the device 120a is adapted to be anchored to said wheel-equipped apparatus 110a in such a way as to remain in contact with the support surface 105. Likewise, said other device 120b is adapted to be anchored to the other wheel-equipped apparatus 110b in such a way as to remain in contact with the support surface 105. In other embodiments of the invention, said devices 120a, 120b may remain in contact with second support surfaces other than said support surface 105, or may remain in contact with the wheels of said wheel-equipped apparatuses 110a, 110b, etc. Said device 120a and other device 120b are adapted to autonomously move said wheel-equipped apparatus 110a and other wheel-equipped apparatus 110b, respectively.

In this embodiment of the invention, the device 120a is connected to the other device 120b anchored to the second wheel-equipped apparatus 110b, e.g. a shopping cart of the user. In such a configuration, said device 120a and other device 120b perform a train-type operating configuration, in which the device 120a (master) is adapted to control the movement of the other device 120b (slave). The train-type operating configuration may comprise one device 120a of the master type and at least one other device 120b of the slave type. This makes it possible to include in the train-type operating configuration, for example, a further device anchored to a further wheel-equipped apparatus, e.g. a further shopping cart of the user (not shown in Figure 1b), and so forth.

In the third embodiment of the invention (Figure 1c) another variant of the system 100 is schematically represented which comprises one or more devices 120a, 120b for self-movement of a wheel-equipped apparatus 110a and said management unit 130.

In this embodiment of the invention, one or more devices 120a, 120b can be anchored to one wheel-equipped apparatus 110a, e.g. which is bigger than said devices 120a, 120b, e.g. a stretcher autonomously moved by the two devices 120a, 120b, which are respectively anchored to the head and tail of the stretcher. In this embodiment, said one or more devices 120a, 120b perform a tandem-type operating configuration, in which the device 120a (master) is adapted to control the movement of the other device 120b (slave) so as to autonomously move a wheel-equipped apparatus 110a, 110b to which they are anchored. In a further embodiment of the invention, two or more of said devices 120a, 120b may be adapted to perform a hybrid operating configuration comprising both said tandem-type operating configuration and said train-type operating configuration.

With reference to Figure 1a, said standalone operating configuration may be performed by said device 120a when said device 120a operates neither as a master nor as a slave. In the standalone operating configuration said device 120a may, for example, autonomously reach the other device 120b before said devices 120a, 120b perform said train-type, tandem-type or hybrid operating configurations, e.g. by following instructions sent from said management unit 130.

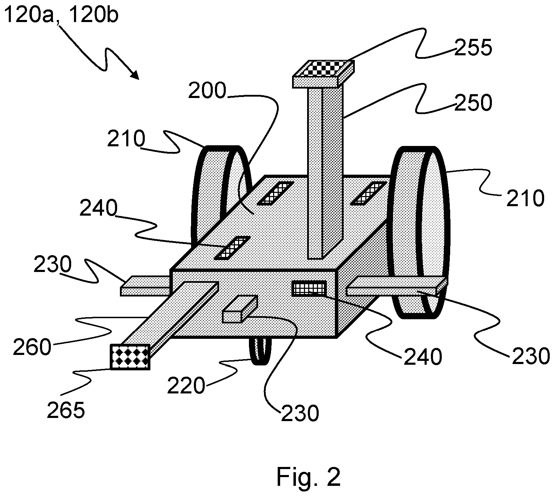

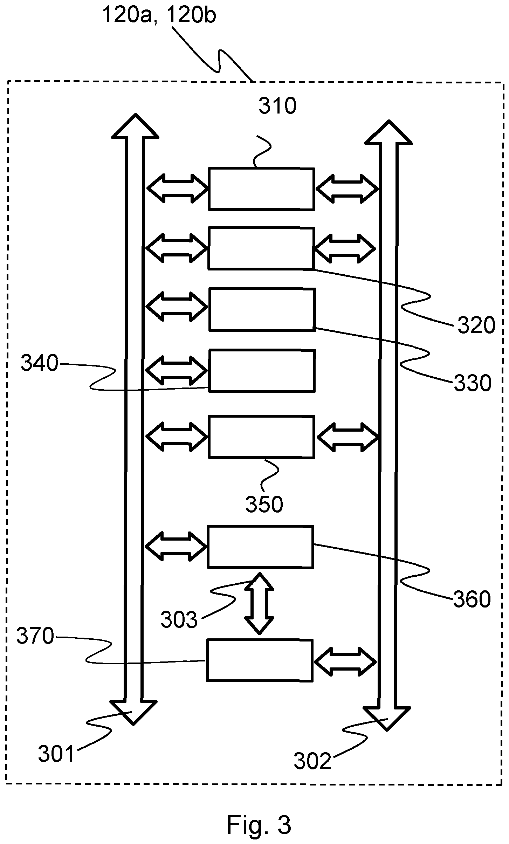

Note that said device 120a is homologous to said other device 120b, and such devices will be described in detail below with reference to Figures 2 and 3. Therefore, in the previously illustrated embodiments said devices 120a, 120b are interchangeable.

Figure 2 shows an illustrative structural diagram of the device 120a, 120b for self-movement of a wheel-equipped apparatus 110a, 110b, with reference to the system 100 of Figures 1a, 1b and 1c. Said device 120a, 120b may comprise a main body 200, driving means 210, stabilizing means 220, anchoring means 230 and expansion means 240.

The main body 220 defines the structure of the device 120a, 120b and is adapted to support said driving means 210, stabilizing means 220 (if any), anchoring means 230 and expansion means 240. The main body 220 may internally comprise elements adapted to make said device 120a, 120b operational, such as, for example, the system for supplying power to the device 120a, 120b, e.g. batteries, power supply units, and so on. Such elements will be described more in detail with reference to Figure 3.

The driving means 210 are adapted to move said device, 120b, e.g. on said support surface 105, or may be mechanically connected, e.g. by friction, to one or more wheels of said wheel-equipped apparatuses 110a, 110b. The driving means 210 may comprise, for example, wheels, tracks or the like mechanically connected to, for example, electric motors.

The stabilizing means 220, if present, are adapted to stabilize said device 120a, 120b, e.g. on said support surface 105. The stabilizing means 220 may comprise, for example, wheels, tracks or the like, which can move and/or rotate freely.

The anchoring means 230 are adapted to anchor said device 120a, 120b to said wheel-equipped apparatus 110a, 110b so as to be mechanically integral with the structure of said wheel-equipped apparatus 110a, 110b. The anchoring means 230 may comprise, for example, arms that can be extended manually and/or automatically, by means of actuators, from said main body 200. The anchoring means 230 may comprise elements configured for engaging the structure of said wheel-equipped apparatus 110a, 110b. Said elements may be, for example, clamps manually or automatically adjustable by means of actuators. Said anchoring means 230 may be adjustable, e.g. in height, in order to better adhere to the structure of said wheel-equipped apparatus 110a, 110b. The anchoring means 230 may be anchored directly to said structure or may be anchored to specific mounting systems, even third-party ones. In another embodiment of the invention, the anchoring means 230 may comprise one or more rollers to be engaged by pressure with the structure of said wheel-equipped apparatus 110a, 110b. For example, two rollers can be spread apart parallel to the support surface 105 to abut against a wheel of the wheel-equipped apparatus 110a, 110b and then engage with it. The anchoring means 230 may be adapted to engage with the anchoring means of another device for self-movement of wheel-equipped apparatuses 110a, 110b. For example, when two or more devices 120a, 120b perform the train-type and/or tandem-type operating configuration. In such operating configuration, for example, the anchoring means 230 of said device 120a may be anchored to said anchoring means 230 of said other device 120b for the purpose of creating a static or movable mechanical junction. The anchoring means 230 may comprise connectors adapted to electrically connect said device 120a and other device 120b, so as to transfer power and/or signals from said device 120a to said other device and/or vice versa. Such signals may be exchanged, for example, via a CANBUS, RS485, etc. interface. In another embodiment of the invention, two or more devices 120a, 120b may perform the train-type and/or tandem-type configuration by transferring power and/or signals from said device 120a to said other device 120b, and vice versa, in wireless mode, regardless of whether they have been anchored together or not.

The expansion means 240 are adapted to receive additional elements 250, 260 in order to improve the functionality of said device 120a, 120b. The expansion means 240 may comprise, for example, one or more slots into which said additional elements 250, 260 can be plugged and/or constrained; such slots may have circular, rectangular, etc. sections and may comprise connectors adapted to electrically connect said device 120a, 120b and said additional elements 250, 260 so as to transfer power and/or signals from said device 120a, 120b to said additional elements 250, 260 and/or vice versa. Such signals may be exchanged, for example, via a CANBUS, RS485, etc. interface. In the present embodiment of the invention, the additional elements 250, 260 may be, for example, a control arm 250 and a sensor holding arm 260, respectively.

The control arm 250 is adapted to interface said device 120a, 120b with the user. The control arm 250 may comprise, for example, a joystick for controlling the movement of the device 120a, 120b, a microphone for voice control of the movement of the device 120a, 120b, and a loudspeaker for audio communication with a remote operator; the microphone and the loudspeaker may be housed, for example, in a control panel 255. The control arm 250 may also comprise a video camera to allow a remote operator to remotely view the path being followed by the device 120a, 120b. For example, in case of movement problems, the operator will be able to take over control of the device 120a, 120b and conduct it to a predefined place. The control arm 250 may also comprise a barcode/RFID reader, e.g. for reading medical recipes and computing the route from the current position of the device 120a, 120b to a room where the user will have to be subjected to specific tests. The control arm 250 may also comprise one or more radars or infrared sensors to obtain information useful for collision avoidance, e.g. by executing a vertical scan to detect the presence of obstacles and/or differences in level (steps) along a path of the device 120a, 120b.

The sensor holding arm 260 is adapted to comprise at least one sensor 265 to permit self-movement of said device 120a, 120b. For example, the sensor holding arm 260 may comprise one or more radars and/or infrared sensors and/or proximity sensors adapted to detect objects for collision avoidance, e.g. by executing a horizontal scan and detecting the position of any obstacles during the forward motion of the device 120a, 120b. The sensor holding arm 260 may be adjustable, e.g. in height, to become better integrated with the structure of said wheel-equipped apparatus 110a, 110b, e.g. in order to not interfere with the footrests of a wheelchair, etc.

In another embodiment of the invention, the expansion means 240 may be connected to external systems, even third-party ones, such as, for example, a metallic shelf for creating a simple self-moving trolley or a support surface for loading additional wheel-equipped apparatuses.

From the above description it is clear that said device 120a, 120b for self-movement of a wheel-equipped apparatus 110a, 110b comprises at least driving means 210, adapted to move said device 120a, 120b, and anchoring means 230, adapted to anchor the device 120a, 120b to the wheel-equipped apparatus 110a, 110b, and that said device 120a, 120b is adapted to be anchored to said wheel-equipped apparatus 110a, 110b by means of the anchoring means 230, wherein said device 110a, 110b is adapted to autonomously move said wheel-equipped apparatus 110a, 110b, to which it is anchored, by means of the driving means 210.

Figure 3 shows an illustrative block diagram of the device 120a, 120b for self-movement of a wheel-equipped apparatus 110a, 110b, with reference to Figures 1 and 2. Said device 120a, 120b may comprise communication means 310, input/output means 320, sensor means 330, actuator means 340, storage means 350, processing means 360 and further processing means 370. Such means may be interconnected via a first communication bus 301, a second communication bus 302 and a third communication bus 303.

The communication means 310 are adapted to establish a communication channel with at least one device 120a, 120b and/or at least one management unit 130. The communication means 310 may comprise, for example, a USB, CANBUS, ETHERNET, WiFi, Bluetooth, GSM, etc. interface. In one embodiment of the invention, during the train-type and/or tandem-type operating configuration the communication means 310 of said device 120a can establish a communication channel, via a Bluetooth interface, with the corresponding communication means 310 of the device 120b. At the same time, the communication means 310 of said device 120a can establish a communication channel with the communication module 132 of said management unit 130, e.g. via a WiFi interface.

The input/output means 320 are adapted to interface the input and output signals, respectively, from and towards said expansion means 240. The input/output means 320 may comprise, for example, CANBUS, USB, RS232, RS485, etc. interfaces.

The sensor means 330 are adapted to acquire values of quantities concerning said device 120a, 120b. For example, said sensor means 330 can acquire physical quantities useful for the self-movement of said device 120a, 120b, such as, for example, accelerometers, speedometers, etc. The sensor means 330 may comprise, for example, an inertial platform or inertial measurement unit (IMU) and/or a global navigation satellite system (GNSS). The actuator means 340 are adapted to actuate the movable elements of said device 120a, 120b, e.g. the driving means 210 and the anchoring means 230 described with reference to Figure 2. The actuator means 340 may comprise electric motors, e.g. for moving said driving means 210, and servomechanisms and similar elements, e.g. for moving the anchoring means 230.

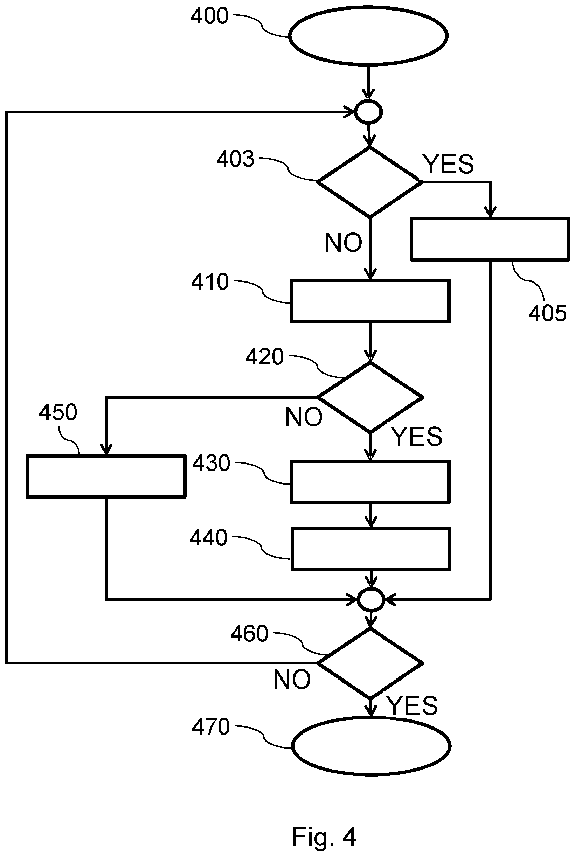

The storage means 350 are adapted to store the information and the instructions of the device 120a, 120b for self-movement of wheel-equipped apparatuses 110a, 110b in accordance with the present embodiment of the invention, and may comprise, for example, a flash-type solid-state memory. The information may comprise a set of values and/or parameters useful for the self-movement of wheel-equipped apparatuses 110a, 110b, such as, for example, a set of maps for self-movement of the device 120a, 120b, the state of the inputs and outputs of the input/output means 320, the position of the movable elements of the device 120a, 120b, and/or values of several physical quantities acquired by the sensor means 330, such as, for example, temperature values, electric current values, electric voltage values, etc. The instructions stored in the storage means 350 will be described in detail hereinafter with reference to the flow chart of Figure 4.

The processing means 360 are adapted to process the information and the instructions stored in the storage means 350 in relation to the communication means 310, input/output means 320, sensor means 330 and actuator means 340, and may comprise, for example, a multicore ARM processor, an Arduino microcontroller, etc. The processing means 360 execute low-level operations such as, for example, Path-Finding, Real-Time-Obstacle-Avoidance and Tip-Over-Prevention operations in Safety-Critical mode, in accordance with the reference standards. The processing means 360 are adapted to establish a communication between said device 120a and said other device 120b via said communication means 310 during the train-type and/or tandem-type operating configuration. The processing means 360 may be adapted to establish a communication between said device 120a, 120b and said management unit 130 via said communication means 310 during the train-type and/or tandem-type configuration or during the standalone operating configuration.

The further processing means 370 are adapted to process the information and the instructions stored in the storage means 350 in relation to the communication means 310 and the input/output means 320, and may comprise, for example, a multicore ARM processor, an Arduino microcontroller, etc. The further processing means 370 execute high-level operations such as, for example, Off-Line-Obstacle-Avoidance operations, based on one or more static maps stored in said storage means 350. The further processing means 370 may implement telecommunication functions, via said communication means 310, e.g. with a remote server, a lift or other domotic devices. The further processing means 370 may implement advanced functions like, for example, recognition of voice commands, e.g. coming from the control arm 250, and so forth.

The first communication bus 301 is adapted to interconnect said communication means 310, input/output means 320, sensor means 330, actuator means 340 and storage means 350 with the processing means 360, which define a low-level subsystem. The second communication bus 302 is adapted to interconnect said communication means 310, input/output means 320 and storage means 350 with the further processing means 370, which define a high-level subsystem. The third communication bus 303 is adapted to mutually connect said processing means 360 and said further processing means 370. The first communication bus 301 and the second communication bus 302 are not mutually coupled; this advantageously allows the high-level subsystem to not interfere with the low-level subsystem, which substantially executes the autonomous driving functions of the device 120a, 120b, thus improving the reliability of the device 120a, 120b. Advantageously, this makes it possible to deactivate the high-level subsystem when its operation is not required, thereby reducing the energy consumption of the device 120a, 120b.

With reference to Figure 4, the following will describe an exemplary method for self-movement of at least one wheel-equipped apparatus 110a, 110b to which at least one device 120a, 120b as shown in Figure 3 has been anchored.

At step 400 an initialization phase is executed for initializing the device 120a, so that the latter can be put in operation. During this step, for example, said processing means 360 and/or said further processing means 370 verify the operating state of the device 120a. During this phase, said processing means 360 and/or said further processing means 370 can perform the anchoring of the device 120a to the wheel-equipped apparatus 110a or 110b through said anchoring means 230. The processing means 360 and/or the further processing means 370 can autonomously move the device 120a by means of said driving means 210, e.g. in accordance with one or more predefined or non-predefined movement schemes.

At step 403, the processing means 360 verify if the device 120a is enabled to perform the standalone operating configuration, in which case the processing means 360 will execute step 405, otherwise they will execute step 410.

At step 405 a movement phase is executed for moving the device 120a. During this phase, said processing means 360 and/or said further processing means 370 autonomously move the device 120a by means of said driving means 210. During this phase, said processing means 360 and/or said further processing means 370 perform the standalone operating configuration of the device 120a, in which said device 120a autonomously moves a single wheel-equipped apparatus 110a to which it is anchored. During this phase, said device 120a performs neither said master operating state nor said slave operating state.

At step 410, the processing means 360 execute an interrogation phase for interrogating at least one other device 120b. During the interrogation phase, the processing means 360 are adapted to send to at least said other device 120b, via said communication means 310, a request for determining an operating state type, whether master or slave, of said other device 120b. The determination of the operating state, whether master or slave, of said other device 120b may depend, for example, on the type of operating configuration, train and/or tandem, and/or on the operating association between the devices 120a, 120b and the corresponding wheel-equipped apparatuses 110a, 110b to which said devices 120a, 120b are anchored. Said operating configuration and said operating association may be established, for example, by the user or by an operator via said management unit 130, or may be obtained from a remote server, etc.

At step 420, the processing means 360 verify the operating state, whether master or slave, of said other device 120b, received via said communication means 310. If the operating state is master, then the processing means 360 will execute step 430, otherwise they will execute step 450.

At step 430, the processing means 360 execute a determination phase for determining control data concerning at least one other device 120b. Said control data comprise information about the type of operating configuration, train and/or tandem, and the operating state, whether master or slave, implemented in the system 100. Said control data may comprise the number of devices 120a, 120b of the system 100, the distances between them, the dimensions of the wheel-equipped apparatuses 110a, 110b to which they are anchored, and so forth. Said control data allow the device 120a to control at least one other device 120b in the slave operating state. During this phase, the processing means 360 can acquire said control data via the communication means 310, e.g. via a WiFi interface, in a given data format. During this phase, the processing means 360 can store said control data into said storage means 350. At step 440, the processing means 360 execute a control phase for controlling at least one other device 120b in the slave operating state. During this phase, the device 120a, which is in the master operating state, controls said at least one other device 120b, via said communication means 310, on the basis of the control data acquired, for example, from the storage means 350.

At step 450, the processing means 360 execute a reception phase for receiving the commands sent from said one other device 120b in the master operating state. During this phase, the operating state of the device 120a is of the slave type, and therefore the device 120a executes the operations received, via said communication means 310, from said other device 120b in the master operating state. During this phase, the device 120a can send, via said communication means 310, information requested by said other device 120b, which is in the master operating state.

It is therefore apparent that said device 120a advantageously executes, through the processing means 360, said determination phase, said control phase and said reception phase based on said operating state type, whether master or slave, of another device 120b.

At step 460, the processing means 360 verify if the device 120a has reached a point of arrival of a path followed by the device 120a itself, e.g. by means of a global satellite navigation system (GNSS) comprised in said sensor means 330. If the device 120a has reached said point of arrival, the processing means 360 will execute step 470, otherwise they will execute step 403.

At step 470, the processing means 360 execute a termination phase in which all those operations are carried out which are necessary for terminating said interrogation, determination, control and reception phases. During this step, the processing means 360 may signal the inoperative state of the device 120a, e.g. by means of luminous indicators, such as LED warning lights included in the device 120a itself. During this phase, the device 120a may assume, for example, the standalone operating configuration.

The advantages of the present invention are apparent in the light of the above description. The device, as well as the associated system and method, for self-movement of wheel-equipped apparatuses is advantageously modular and easy to install for a user not specifically trained for such purpose.

Another advantage of the present invention lies in the fact that it provides a device, as well as the associated system and method, for self-movement of wheel-equipped apparatuses which advantageously makes it possible to use different, low-cost sensors in a modular manner via the expansion means. This advantageously allows reducing the costs in comparison with the currently available self-moving wheelchairs.

Another advantage of the present invention lies in the fact that it provides a device, as well as the associated method and system, for self-movement of wheel-equipped apparatuses which advantageously permits moving several wheel-equipped apparatuses at the same time by means of the train-type and/or tandem-type operating configurations.

A further advantage of the present invention lies in the fact that it provides a device, as well as the associated method and system, for self-movement of wheel-equipped apparatuses which advantageously permits moving people and things on different wheel-equipped apparatuses at the same time, by means of the train-type and/or tandem-type operating configurations.

Of course, without prejudice to the principle of the present invention, the forms of embodiment and the implementation details may be extensively varied from those described and illustrated herein merely by way of non-limiting example, without however departing from the protection scope of the present invention as set out in the appended claims.

## Claims

1. System (100) comprising:
- at least one wheel-equipped apparatus (110a) originally conceived for being moved manually by a disabled user;
- at least one device (120a) comprising driving means (210) adapted to move said device (120a), anchoring means (230) adapted to anchor said device (120a) to said at least one wheel-equipped apparatus (110a),
wherein said device (120a) is adapted to autonomously move said wheel-equipped apparatus (110a), to which it is anchored, through said driving means (210),
said system (100) being **characterized in that** said device (120a) comprises:
- a first communication bus (301) adapted to interconnect communication means (310), input/output means (320), sensor means (330), actuator means (340) and storage means (350) with processing means (360) of said device (120a), defining a low-level subsystem wherein said processing means (360) execute low-level operations in Safety-Critical mode, in particular Path-Finding, Real-Time-Obstacle-Avoidance and Tip-Over-Prevention operations;
- a second communication bus (302) adapted to interconnect said communication means (310), said input/output means (320) and said storage means (350) with further processing means (370) of said device (120a), defining a high-level subsystem wherein said further processing means (370) execute high-level operations, in particular Off-Line-Obstacle-Avoidance operations and/or telecommunication functions and/or recognition of voice commands;
- a third communication bus (303) adapted to mutually connect said processing means (360) and said further processing means (370), wherein the first communication bus (301) and the second communication bus (302) are not mutually coupled and wherein said actuator means (340) are adapted to actuate said driving means (210) and said anchoring means (230).

2. System (100) according to claim 1, wherein said device (120a) comprises communication means (310) and processing means (360) configured for executing:
- an interrogation phase, wherein said processing means (360) send to at least one other device (120b), via said communication means (310), a request for determining an operating state type, whether master or slave, of said other device (120b);
- a determination phase, wherein said processing means (360) determine control data relating to at least said other device (120b), said control data being acquired via said communication means (310), wherein said control data allow said device (120a) to control at least said other device (120b) in the slave operating state;
- a control phase, wherein said processing means (360) control, via said communication means (310), at least said other device (120b) in the slave operating state, wherein during said control phase said device (120a) is in a master operating state;
- a reception phase, wherein said processing means (360) receive, via said communication means (310), commands sent from said at least one other device (120b) in the master operating state,
wherein said determination phase, said control phase and said reception phase are carried out by said processing means (360) based on said operating state type, whether master or slave, of said at least one other device (120b).

3. System (100) according to claim 2, wherein said operating state, whether master or slave, of said at least one other device (120b) depends on the type of operating configuration, train and/or tandem, and/or on the operating association between said devices (120a, 120b) and the corresponding wheel-equipped apparatuses (110a, 110b) to which said devices (120a, 120b) are anchored.

4. System (100) according to one or more of claims 2 and 3, wherein said device (120a) is adapted to communicate with a management unit (130) adapted to manage said at least one device (120a).

5. System (100) according to one or more of claims 3 and 4, wherein said at least two devices (120a, 120b) are adapted to perform a train-type operating configuration in which said device (120a), anchored to said wheel-equipped apparatus (110a), is adapted to perform said master operating state and said at least one other device (120b), anchored to another wheel-equipped apparatus (110b), is adapted to perform said slave operating state.

6. System (100) according to one or more of claims 3 and 4, wherein said at least two devices (120a, 120b) are adapted to perform a tandem-type operating configuration in which said device (120a) and said at least one other device (120b) are anchored to said wheel-equipped apparatus (110a), wherein said device (120a) is adapted to perform said master operating state and said at least one other device (120b) is adapted to perform said slave operating state, so as to autonomously move said wheel-equipped apparatus (110a) to which they are anchored.

7. System (100) according to one or more of claims 5 and 6, wherein said devices (120a, 120b) are adapted to perform a hybrid operating configuration comprising both said tandem-type operating configuration and said train-type operating configuration.

8. A device (120a) of a system (100) according to one or more of claims from 1 to 7.

## Patentansprüche

1. System (100), umfassend:
- mindestens ein mit Rädern ausgestattetes Gerät (110a), das ursprünglich dafür konzipiert wurde, von einem behinderten Benutzer manuell bewegt zu werden;
- mindestens eine Vorrichtung (120a), die Antriebsmittel (210), die dafür ausgelegt sind, die Vorrichtung (120a) zu bewegen, Verankerungsmittel (230), die dafür ausgelegt sind, die Vorrichtung (120a) an dem mindestens einen mit Rädern ausgestatteten Gerät (110a) zu verankern, umfasst,
wobei die Vorrichtung (120a) dazu ausgelegt ist, das mit Rädern ausgestattete Gerät (110a), an dem sie verankert ist, durch die Antriebsmittel (210) autonom zu bewegen, wobei das System (100) **dadurch gekennzeichnet ist, dass** die Vorrichtung (120a) umfasst:
- einen ersten Kommunikationsbus (301), der dazu ausgelegt ist, Kommunikationsmittel (310), Ein-/Ausgabemittel (320), Sensormittel (330), Aktuatormittel (340) und Speichermittel (350) mit Verarbeitungsmitteln (360) der Vorrichtung (120a) zu verbinden, um ein Low-Level-Subsystem zu definieren, in dem die Verarbeitungsmittel (360) Low-Level-Operationen in einem sicherheitskritischen Modus ausführen, insbesondere Pfadfindungs-, Echtzeit-Hindernisvermeidungs- und Kippschutzoperationen;
- einen zweiten Kommunikationsbus (302), der dazu ausgelegt ist, die Kommunikationsmittel (310), die Ein-/Ausgabemittel (320) und die Speichermittel (350) mit weiteren Verarbeitungsmitteln (370) der Vorrichtung (120a) zu verbinden, um ein High-Level-Subsystem zu definieren, in dem die weiteren Verarbeitungsmittel (370) High-Level-Operationen ausführen, insbesondere Offline-Hindernisvermeidungsoperationen und/oder Telekommunikationsfunktionen und/oder Erkennung von Sprachbefehlen;
- einen dritten Kommunikationsbus (303), der dazu ausgelegt ist, die Verarbeitungsmittel (360) und die weitere Verarbeitungsmittel (370) miteinander zu verbinden, wobei der erste Kommunikationsbus (301) und der zweite Kommunikationsbus (302) nicht miteinander gekoppelt sind und wobei die Aktuatormittel (340) dazu ausgelegt sind, die Antriebsmittel (210) und die Verankerungsmittel (230) zu betätigen.

2. System (100) nach Anspruch 1, wobei die Vorrichtung (120a) Kommunikationsmittel (310) und Verarbeitungsmittel (360) umfasst, die so konfiguriert sind, dass sie ausführen:
- eine Abfragephase, in der die Verarbeitungsmittel (360) über die Kommunikationsmittel (310) an mindestens eine andere Vorrichtung (120b) eine Anforderung zum Bestimmen eines Betriebszustandstyps, ob Master oder Slave, der anderen Vorrichtung (120b) senden;
- eine Bestimmungsphase, in der die Verarbeitungsmittel (360) Steuerdaten bestimmen, die sich auf mindestens die andere Vorrichtung (120b) beziehen, wobei die Steuerdaten über die Kommunikationsmittel (310) erfasst werden, wobei die Steuerdaten es der Vorrichtung (120a) ermöglichen, mindestens die andere Vorrichtung (120b) im Slave-Betriebszustand zu steuern;
- eine Steuerphase, in der die Verarbeitungsmittel (360) über die Kommunikationsmittel (310) zumindest die andere Vorrichtung (120b) im Slave-Betriebszustand steuern, wobei sich die Vorrichtung (120a) während der Steuerphase in einem Master-Betriebszustand befindet;
- eine Empfangsphase, in der die Verarbeitungsmittel (360) über die Kommunikationsmittel (310) Befehle empfangen, die von der mindestens einen anderen Vorrichtung (120b) im Master-Betriebszustand gesendet werden,
wobei die Bestimmungsphase, die Steuerphase und die Empfangsphase von den Verarbeitungsmitteln (360) auf der Grundlage des Betriebszustandstyps, ob Master oder Slave, der mindestens einen anderen Vorrichtung (120b) ausgeführt werden.

3. System (100) nach Anspruch 2, wobei der Betriebszustand, ob Master oder Slave, der mindestens einen anderen Vorrichtung (120b) von der Art der Betriebskonfiguration, Zug und/oder Tandem, und/oder von der Betriebsverbindung zwischen den Vorrichtungen (120a, 120b) und den entsprechenden mit Rädern ausgestatteten Geräten (110a, 110b), an denen die Vorrichtungen (120a, 120b) verankert sind, abhängt.

4. System (100) nach einem oder mehreren der Ansprüche 2 und 3, wobei die Vorrichtung (120a) dazu ausgelegt ist, mit einer Verwaltungseinheit (130) zu kommunizieren, die dazu ausgelegt ist, die mindestens eine Vorrichtung (120a) zu verwalten.

5. System (100) nach einem oder mehreren der Ansprüche 3 und 4, wobei die mindestens zwei Vorrichtungen (120a, 120b) dazu ausgelegt sind, eine zugartige Betriebskonfiguration auszuführen, in der die Vorrichtung (120a), die an dem mit Rädern ausgestatteten Gerät (110a) verankert ist, dazu ausgelegt ist, den Master-Betriebszustand auszuführen, und die mindestens eine andere Vorrichtung (120b), die an einem anderen mit Rädern ausgestatteten Gerät (110b) verankert ist, dazu ausgelegt ist, den Slave-Betriebszustand auszuführen.

6. System (100) nach einem oder mehreren der Ansprüche 3 und 4, wobei die mindestens zwei Vorrichtungen (120a, 120b) dazu ausgelegt sind, eine tandemartige Betriebskonfiguration auszuführen, in der die Vorrichtung (120a) und die mindestens eine andere Vorrichtung (120b) an dem mit Rädern ausgestatteten Gerät (110a) verankert sind, wobei die Vorrichtung (120a) so ausgelegt ist, dass sie den Master-Betriebszustand ausführt, und die mindestens eine andere Vorrichtung (120b) so ausgelegt ist, dass sie den Slave-Betriebszustand ausführt, um das mit Rädern ausgestattete Gerät (110a), an dem sie verankert sind, autonom zu bewegen.

7. System (100) nach einem oder mehreren der Ansprüche 5 und 6, wobei die Vorrichtungen (120a, 120b) dazu ausgelegt sind, eine hybride Betriebskonfiguration auszuführen, die sowohl die tandemartige Betriebskonfiguration als auch die zugartige Betriebskonfiguration umfasst.

8. Vorrichtung (120a) eines Systems (100) nach einem oder mehreren der Ansprüche 1 bis 7.

## Revendications

1. - Système (100) comprenant :
- au moins un appareil équipé de roues (110a) conçu à l'origine pour être déplacé manuellement par un utilisateur handicapé ;
- au moins un dispositif (120a) comprenant des moyens d'entraînement (210) agencés pour déplacer ledit dispositif (120a), des moyens d'ancrage (230) agencés pour ancrer ledit dispositif (120a) audit au moins un appareil équipé de roues (110a),
ledit dispositif (120a) étant agencé pour déplacer de manière autonome ledit appareil équipé de roues (110a), auquel il est ancré, par l'intermédiaire desdits moyens d'entraînement (210),
ledit système (100) étant **caractérisé par le fait que** ledit dispositif (120a) comprend :
- un premier bus de communication (301) agencé pour interconnecter des moyens de communication (310), des moyens d'entrée/sortie (320), des moyens de capteur (330), des moyens d'actionneur (340) et des moyens de stockage (350), avec des moyens de traitement (360) dudit dispositif (120a), définissant un sous-système de bas niveau dans lequel lesdits moyens de traitement (360) exécutent des opérations de bas niveau dans un mode de sécurité critique, en particulier des opérations de recherche de trajet, d'évitement d'obstacle en temps réel et de prévention de basculement ;
- un deuxième bus de communication (302) agencé pour interconnecter lesdits moyens de communication (310), lesdits moyens d'entrée/sortie (320) et lesdits moyens de stockage (350) avec des moyens de traitement supplémentaires (370) dudit dispositif (120a), définissant un sous-système de haut niveau dans lequel lesdits moyens de traitement supplémentaires (370) exécutent des opérations de haut niveau, en particulier des opérations d'évitement d'obstacle hors ligne et/ou des fonctions de télécommunication et/ou une reconnaissance de commandes vocales ;
- un troisième bus de communication (303) agencé pour connecter mutuellement lesdits moyens de traitement (360) et lesdits moyens de traitement supplémentaires (370), le premier bus de communication (301) et le deuxième bus de communication (302) n'étant pas couplés mutuellement, et lesdits moyens d'actionneur (340) étant agencés pour actionner lesdits moyens d'entraînement (210) et lesdits moyens d'ancrage (230).

2. - Système (100) selon la revendication 1, dans lequel ledit dispositif (120a) comprend des moyens de communication (310) et des moyens de traitement (360) configurés pour exécuter :
- une phase d'interrogation, dans laquelle lesdits moyens de traitement (360) envoient à au moins un autre dispositif (120b), via lesdits moyens de communication (310), une requête pour déterminer un type d'état de fonctionnement, maître ou esclave, dudit autre dispositif (120b) ;
- une phase de détermination, dans laquelle lesdits moyens de traitement (360) déterminent des données de commande relatives au moins audit autre dispositif (120b), lesdites données de commande étant acquises via lesdits moyens de communication (310), lesdites données de commande permettant audit dispositif (120a) de commander au moins ledit autre dispositif (120b) dans l'état de fonctionnement esclave ;
- une phase de commande, dans laquelle lesdits moyens de traitement (360) commandent, via lesdits moyens de communication (310), au moins ledit autre dispositif (120b) dans l'état de fonctionnement esclave, pendant ladite phase de commande ledit dispositif (120a) étant dans un état de fonctionnement maître ;
- une phase de réception, dans laquelle lesdits moyens de traitement (360) reçoivent, via lesdits moyens de communication (310), des commandes envoyées par ledit au moins un autre dispositif (120b) dans l'état de fonctionnement maître,
ladite phase de détermination, ladite phase de commande et ladite phase de réception étant réalisées par lesdits moyens de traitement (360) sur la base dudit type d'état de fonctionnement, maître ou esclave, dudit au moins un autre dispositif (120b).

3. - Système (100) selon la revendication 2, dans lequel ledit état de fonctionnement, maître ou esclave, dudit au moins un autre dispositif (120b) dépend du type de configuration de fonctionnement, train et/ou tandem, et/ou de l'association de fonctionnement entre lesdits dispositifs (120a, 120b) et les appareils équipés de roues (110a, 110b) correspondants auxquels lesdits dispositifs (120a, 120b) sont ancrés.

4. - Système (100) selon une ou plusieurs des revendications 2 et 3, dans lequel ledit dispositif (120a) est agencé pour communiquer avec une unité de gestion (130) agencée pour gérer ledit au moins un dispositif (120a).

5. - Système (100) selon une ou plusieurs des revendications 3 et 4, dans lequel lesdits au moins deux dispositifs (120a, 120b) sont agencés pour réaliser une configuration de fonctionnement de type train dans laquelle ledit dispositif (120a), ancré audit appareil équipé de roues (110a), est agencé pour exécuter ledit état de fonctionnement maître et ledit au moins un autre dispositif (120b), ancré à un autre appareil équipé de roues (110b), est agencé pour exécuter ledit état de fonctionnement esclave.

6. - Système (100) selon une ou plusieurs des revendications 3 et 4, dans lequel lesdits au moins deux dispositifs (120a, 120b) sont agencés pour réaliser une configuration de fonctionnement de type tandem dans laquelle ledit dispositif (120a) et ledit au moins un autre dispositif (120b) sont ancrés audit appareil équipé de roues (110a), ledit dispositif (120a) étant agencé pour exécuter ledit état de fonctionnement maître et ledit au moins un autre dispositif (120b) étant agencé pour exécuter ledit état de fonctionnement esclave, de façon à déplacer de manière autonome ledit appareil équipé de roues (110a) auquel ils sont ancrés.

7. - Système (100) selon une ou plusieurs des revendications 5 et 6, dans lequel lesdits dispositifs (120a, 120b) sont agencés pour réaliser une configuration de fonctionnement hybride comprenant à la fois ladite configuration de fonctionnement de type tandem et ladite configuration de fonctionnement de type train.

8. - Dispositif (120a) d'un système (100) selon une ou plusieurs des revendications 1 à 7.
